# EUROPEAN PATENT SPECIFICATION

(11) **EP 0 878 285 B1**
(45) Date of publication and mention of the grant of the patent: **24.09.2003**
(21) Application number: 97929533.4
(22) Date of filing: 07.07.1997
(51) Int. Cl.: B29C 45/16, B29C 45/14, B29C 43/18

(54) **PROCESS FOR THE PRODUCTION OF PATTERNED MOLDINGS OF SILICONE RUBBER**
VERFAHREN ZUR HERSTELLUNG VON GEMUSTERTEN FORMMASSEN AUS SILIKONKAUTSCHUK
PROCEDE D'ELABORATION POUR MOULAGES A MOTIFS EN CAOUTCHOUC SILICONE

(30) Priority: 08.07.1996 JP 19844796
(43) Date of publication of application: 18.11.1998
(73) Proprietor: GE TOSHIBA SILICONES CO., LTD., Tokyo (JP); NISSHA PRINTING CO., LTD., Nakagyo-ku Kyoto-shi Kyoto 604-8873 (JP)
(72) Inventor: SAWAMURA, Tatsuhiko, Toshiba Silicone Co., Ltd., Tokyo 106 (JP); UENO, Hideki, Toshiba Silicone Co., Ltd., Tokyo 106 (JP); FUJII, Kentaro, Nissha Printing Co., Ltd., Kyoto-shi, Kyoto 604 (JP); SHIGETA, Hiroyasu, Nissha Printing Co., Ltd., Kyoto-shi, Kyoto 604 (JP)
(74) Representative: Füchsle, Klaus, Dipl.-Ing.
(86) International application number: JP9702333
(87) International publication number: WO98001281

(56) References cited:
- EP-A- 0 143 994
- EP-A- 0 276 790
- EP-A- 0 381 384
- EP-A- 0 540 259
- DE-A- 4 425 342
- DE-U- 29 508 257
- JP-A- 8 294 938
- JP-A- 8 294 940
- JP-A- 9 212 272
- US-A- 4 500 218
- US-A- 4 528 156
- US-A- 4 657 419
- US-A- 5 187 014
- PATENT ABSTRACTS OF JAPAN vol. 096, no. 001, 31 January 1996 & JP 07 249341 A (SHINANO POLYMER KK;OTHERS: 01), 26 September 1995
- PATENT ABSTRACTS OF JAPAN vol. 010, no. 242 (M-509), 21 August 1986 & JP 61 072579 A (FUJI GOMME KK), 14 April 1986

## Description

### Technical Field

The present invention relates to a process of producing a design attached silicone rubber molded article (i.e. a silicone rubber molded article with a design attached) in which a silicone rubber composition is cured to form the molded article simultaneously with the attachment of the design to a surface of the article, a molded article produced by such a process, a transfer material or a cover film which is used for such a process, and a molded article which is produced using the transfer material or the cover film. The present invention allows a design such as a character, a mark and/or a pattern to strongly attache to a surface of the silicone rubber molded article, which is preferably used for an article such as a keyboard, a self-illuminating switching device and so on.

### Background Art

As a process of attaching onto a surface of a silicone rubber molded article a design such as a character, a mark, a pattern and so on, the following processes have been hitherto employed:

One process is disclosed in for example Japanese Patent Kokai Publication (JP-A) No. 8-294938, the disclosure of which constitutes a part of the description of the present invention by the reference, provided that it is not opposed to the object of the present invention. The process produces a design attached silicone rubber molded article by
sandwiching between forces of a mold a transfer material which comprises a transfer layer (which comprises a release layer, a design layer, an adhesion layer and so on) formed on a substrate sheet,
supplying an uncured silicone rubber composition Into a mold cavity on a transfer layer side and filling the cavity,
curing the composition so as to form a silicone rubber molded article and simultaneously attaching the transfer material to a surface of the article, and then
peeling off the substrate sheet from the article to transfer the transfer layer onto a surface of the article so that the design is formed on the article. This process has an advantage in that necessary steps are reasonably reduced since the design is formed within the transfer material and the formation of the design on the article is carried out simultaneously with molding the article.

There is also another process in which the transfer material of the above process is replaced with a cover film. This process is disclosed in for example Japanese Patent Kokai Publication (JP-A) No. 8-294940, the disclosure of which constitutes a part of the description of the present invention by the reference, provided that it is not opposed to the object of the present invention. The process produces a design attached silicone rubber molded article by
sandwiching between forces of a mold a cover film which comprises a substrate sheet, a design layer, an adhesion layer and so on which are on the substrate sheet,
supplying an uncured silicone rubber composition of into a mold cavity on a design layer side and filling the cavity, and
curing the composition so as to form a silicone rubber molded article and simultaneously attaching the cover film to a surface of the article. Also, this process has an advantage in that necessary steps are reasonably reduced since the design is indirectly formed within the cover film and the formation of the design on the article is carried out simultaneously with the molding of the article.
In the above prior processes of producing the design attached silicone rubber molded article, bonding of the transfer layer or the cover film to the silicone rubber molded article is effected by the adhesion layer. However, since the surface of the silicone rubber molded article is less active, there is a problem in that strong bonding is not always achieved.

To date, because of low chemical reactivity of the surface of silicone rubber, there are examples such as Japanese Kokai Patent Publication (JP-A) No. 8-333465, "Process for coating silicone rubber using epoxy resin and silicon rubber products coated with epoxy resin," as processes for adhering a different resin on the surface of silicone rubber. This is a process in which a primer formulated with trialkoxysilanes and the like containing an epoxy group is coated on the surface of silicone rubber. Then, on top of this a composition layer containing an epoxy-group-containing compound, an amine-type curing agent and a surface active agent is formed and cured. Although the process where the surface of the silicone rubber is coated with the cured epoxy resin is mentioned, this coating process has a disadvantage in that the operation process is extremely complicated and the cost becomes high. Furthermore, when the primer is coated on the surface of the silicone rubber, the coating can be uneven, and sufficient adhesion cannot be obtained.

Alternatively, there are patents which mention adhesion of different resins such as Japanese Kokai Patent Publication (JP-A) No. 8-118417, "Polyurethane coated silicone rubber molded article and the production process thereof; however, because the silicone rubbers used therein must necessarily be silicone rubbers which have self-adhesive properties, there is a disadvantage in that unless a fluoride resin coating is coated on the metal mold, then the silicone resin adheres to the mold, and satisfactory adhesive properties between the different resins cannot be obtained.

Because of this, processes for preparing designs of letters, symbols, patterns, and the like on the surface of the silicone rubber have been limited to printing processes using silicone inks.

Suggestions for such printing processes using the silicone inks are screen printing or printing processes using a transfer process as seen in Japanese Kokoku Patent Publication (JP-B) Nos. 60-2323, 1-35749, 2-27154, and 4-58128.

The problem with the screen printing is that when a number of different colors are used to make the design, because it is not possible to form layers of color all at the same time, the necessary number of printing steps is the same as the number of the necessary colors. Furthermore, as one condition of the design, when a silicone rubber article having a transparent portion is obtained, after the whole of the upper surface of the molded silicon rubber article has been coated in a color through which light cannot pass, for example, black, there is a disadvantage in that a transparent portion must be prepared by removing one portion of the coating layer using, for example, laser light.

As to the problems of printing using the silicone inks, because the silicone inks are limited to those with high viscosities and the number of the available colors is also limited, there is a problem in that basically it is very difficult to produce designs having fine lines or many colors. Furthermore, because designs on the surface of the silicone rubber are printed whilst protruding, there is a disadvantage in that the printed design peels off easily. Additionally, there is a disadvantage in that the silicone ink has poor abrasion strength and letters become scratched whilst in use. Furthermore, silicone rubber easily absorbs oil and so when used for keyboard controls, oil from fingers penetrates from the key top to the electrically conducting part underneath the keyboard and a problem arises with contact difficulties.

Furthermore, when transfer-printing silicone ink onto silicone rubber, in addition to the above-mentioned problems, because the silicone ink must be printed on top of the transfer plate, when using automatic equipment which installs this, extremely large-scale equipment is required, and there is a disadvantage in that the costs become high. Additionally, when the preparation has several tens of thousands or several tens of millions of shots, because an extremely high number of transfer plates are necessary, there is a problem in that production efficiency is extremely poor.

### Disclosure of Invention

It is, therefore, an object of the present invention to provide a process of producing a design attached silicone rubber molded article (i.e. a silicone rubber molded article with a design attached) which process strongly bonds a design to a surface of a silicone rubber molded article, a molded article produced by such a process, a transfer material or a cover film which is used for such a process, and a molded article (such as an injection molded article, a press or compression molded article and so on) which is produced using the transfer material or the cover film.

In the first aspect, the present invention provides a process of producing a design attached silicone rubber molded article comprising the steps of:
placing onto a mold a cover film which comprises a substrate sheet and a design layer which is located on at least a portion of one side of the substrate sheet, and
supplying an uncured silicone rubber composition into a cavity of the mold on a design layer side and curing the composition so that a silicone rubber molded article which is integrated with the cover film is formed,
characterized in that at least a portion of the cover film except the substrate sheet which portion contacts the silicone rubber composition in the mold contains; as a bond accelerating component, at least one compound selected from the group consisting of alkoxysilanes containing at least one unsaturated bond and polyorganohydrogensiloxanes containing at least two hydrogen atoms which bond to the same silicon atom or different silicon atoms.

In the second aspect, the present invention provides a process of producing a design attached silicone rubber molded article comprising the steps of:
placing onto a mold a cover film (transfer material) which comprises a substrate sheet and a design layer which is located on at least a portion of one side of the substrate sheet,
supplying an uncured silicone rubber composition into a cavity of the mold on a design layer side and curing the composition so that a silicone rubber molded article which is integrated with the transfer material is formed, and
separating off the substrate sheet from the silicone rubber molded article which is integrated with the transfer material,
characterized in that at least a portion of the transfer material except the substrate sheet which portion contacts the silicone rubber composition in the mold contains, as a bond accelerating component, at least one compound selected from the group consisting of alkoxysilanes containing at least one unsaturated bond and polyorganohydrogensiloxanes containing at least two hydrogen atoms which bond to the same silicon atom or different silicon atoms.

In the above process, the separating off step of the substrate sheet in one embodiment may comprise a step of opening the mold after curing the silicone rubber composition and taking out the silicone rubber molded article which is integrated with the transfer material from the mold, and a step of peeling the substrate sheet off the silicone rubber molded article which is integrated with the transfer material so as to obtain the design attached silicone rubber molded article. In another embodiment, the separating off step may comprise a step of opening the mold after curing the silicone rubber composition and peeling the substrate sheet off the silicone rubber molded article which is integrated with the transfer material so that the design attached silicone rubber molded article is left in the mold, and a step of taking out the design attached silicone rubber molded article from the mold. In a further embodiment, the above two embodiments may be combined, that is, the separating off of the substrate sheet may comprise a step of opening the mold after curing the silicone rubber composition and taking the silicone rubber molded article which is integrated with the transfer material out of the mold while peeling off the substrate sheet from the silicone rubber molded article which is integrated with the transfer material.

In each of the above processes, the alkoxysilanes which may be used as the bond accelerating component are so-called silane-coupling agents each having an unsaturated bond(s) such as an ethylenic bond. Typically but not limited, vinyltriethoxysilane (for example commecially available from Toshiba Silicone Co., Ltd. and Shin-Etsu Chemical Co. as TSL8311 and KBE1003, respectively) is an example of such a silane-coupling agent. For example, vinyltris(2-methoxyethoxy)silane (for example commecially available from Shin-Etsu Chemical Co. as KBC1003) and 3-methacryloxypropyl-trimethoxysilane (for example commercially available from Toshiba Silicone Co., Ltd., Shin-Etsu Chemical Co., Ltd, and Toray-Dow Coming Silicone Co., Ltd. as TSL8370, KBM503 and SZ6030, respectively) are also preferably used. Further, with respect of the polyorganohydrogensiloxane, component b) (including component B)) of the silicone rubber composition used in the present invention which will be described below may be used as the bond accelerating agent. An example of the polyorganohydrogensiloxane is methylhydrogensiloxane, which is for example commercially available from Toshiba Silicone Co., Ltd., Shin-Etsu Chemical Co., Ltd, and Toray-Dow Corning Silicone Co., Ltd. as TSF484, KF 99 and SH1107 respectively.

In any of the production processes, the portion which contains the bond accelerating agent preferably contains it in a content in the range from 0.1 to 10 % by weight based on a wight of that portion.

When the molded article is formed in a compression or pressing molding process according to the present invention, the compression molding process may comprise the following steps:
locating a transfer material or a cover film,
inserting an intermediate plate of a mold,
supplying an uncured silicone rubber composition in a cavity of the intermediate plate,
mounting a upper force of the mold,
compressing at a temperature between 100 and 170 °C,
removing the mold after curing of the silicone rubber composition,
removing the upper force, and
taking out a silicone rubber molded article from the cavity of the intermediate plate.

### Brief Description of Drawings

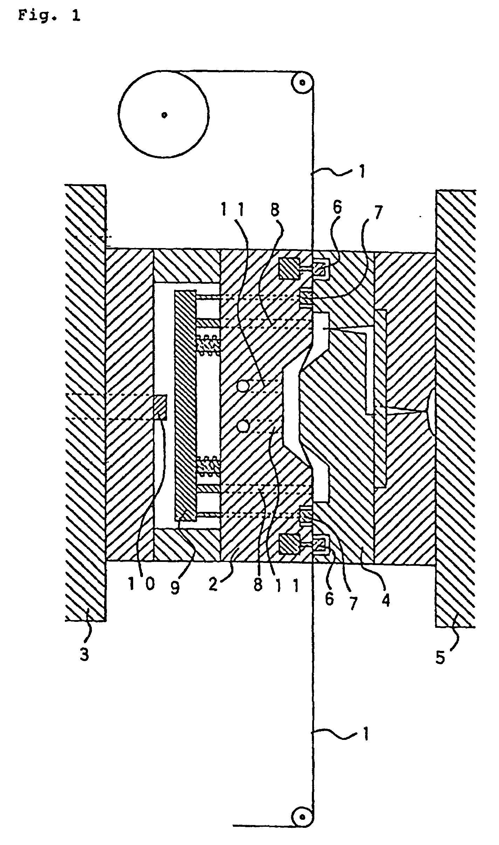

Fig. 1 shows a cross-sectional view of one embodiment of a mold for injection molding with which the production process for the silicone rubber molded article with the design attached according to the present invention is carried out in which view the mold is closed before a silicone rubber composition is supplied;

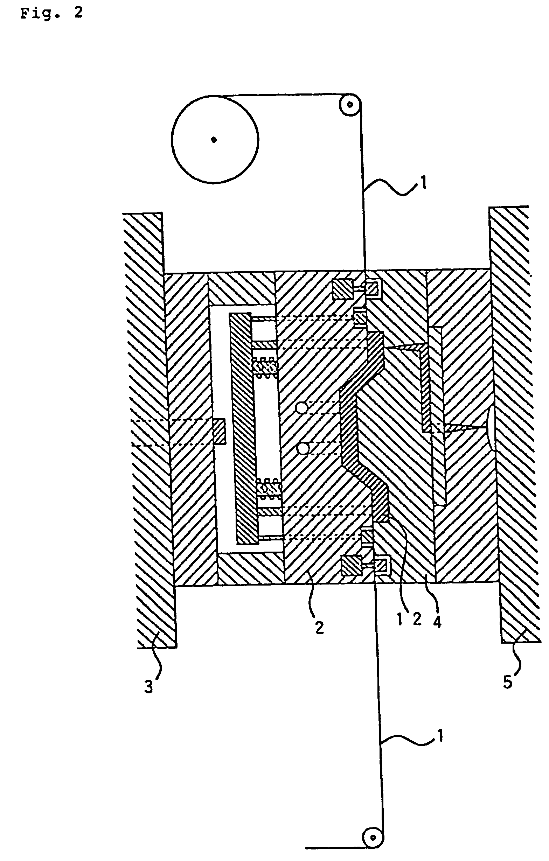

Fig. 2 shows a cross-sectional view of one embodiment of a mold for injection molding with which the production process for the silicone rubber molded article with the design attached according to the present invention is carried out in which view the silicone rubber composition has been supplied;
Fig. 3 shows a cross-sectional view of one embodiment of a mold for injection molding with which the production process for the silicone rubber molded article with the design attached according to the present invention is carried out in which view the mold is opened after curing a silicone rubber composition;

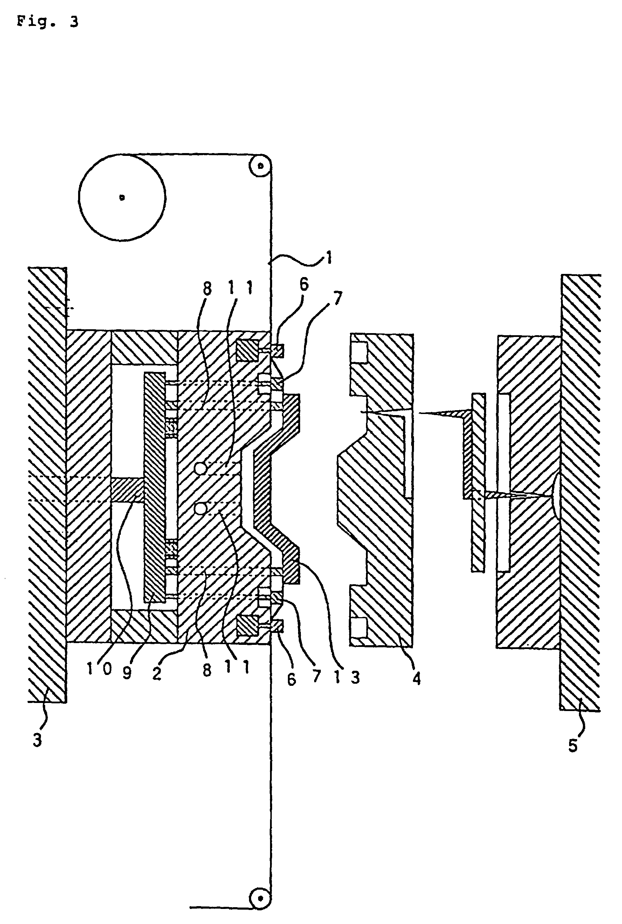

Fig. 4 shows a cross-sectional view of one embodiment of a mold for injection molding with which the production process for the silicone rubber molded article with the design attached according to the present invention is carried out in which view the silicone rubber molded article has been removed from the mold;

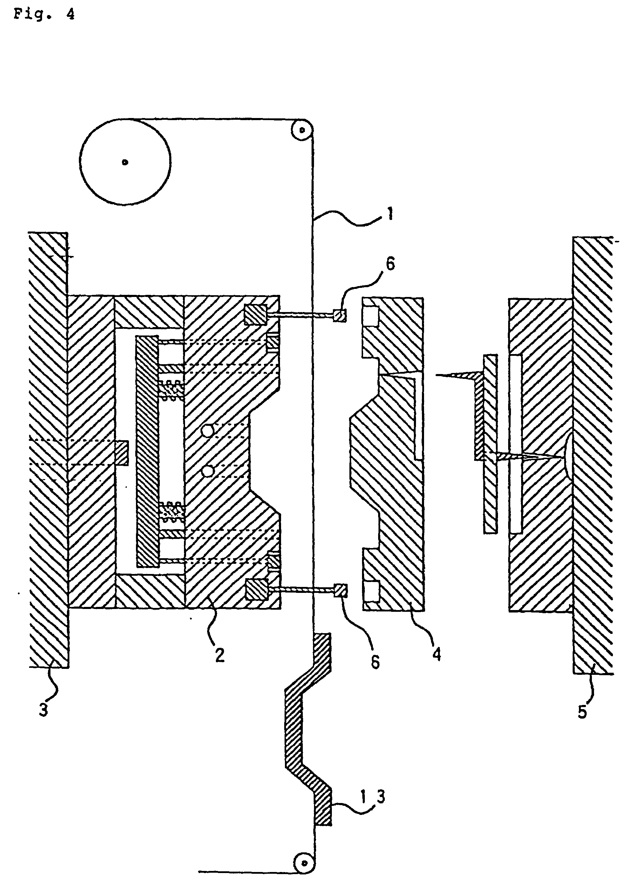

Fig. 5 shows a partially cut-away perspective view of one embodiment of a silicone rubber molded article with the design attached which can be produced by the process of the present invention;
Fig. 6 shows a cross-sectional view of one embodiment of a transfer material which is used in the production process for the silicone rubber molded article with the design attached;

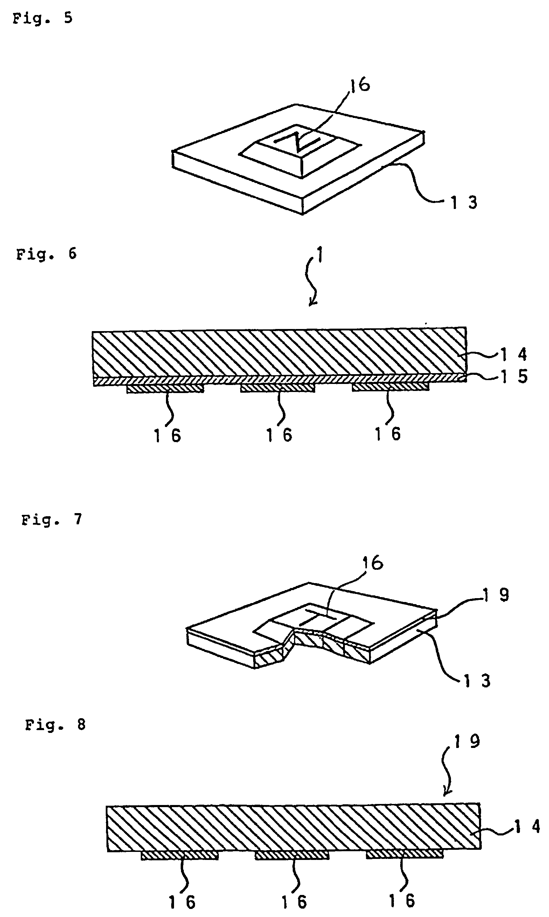

Fig. 7 shows a partially cut-away perspective view of one embodiment of a silicone rubber molded article with the design attached which can be produced by the process of the present invention;

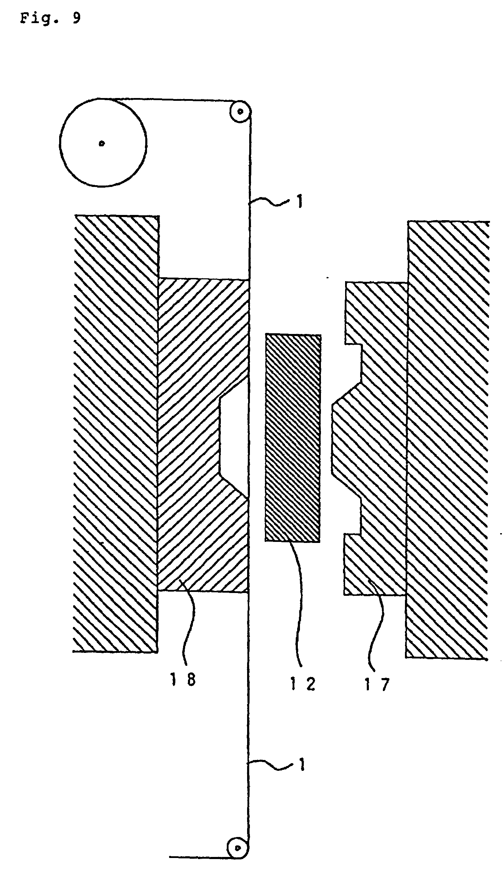

Fig. 8 shows a cross-sectional view of one embodiment of a cover film which is used in the production process for the silicone rubber molded article with the design attached;
Fig. 9 shows a cross-sectional view of one embodiment of a mold for press (or compression) molding with which the production process for the silicone rubber molded article with the design attached according to the present invention is carried out in which view the mold is closed before a silicone rubber composition is supplied;

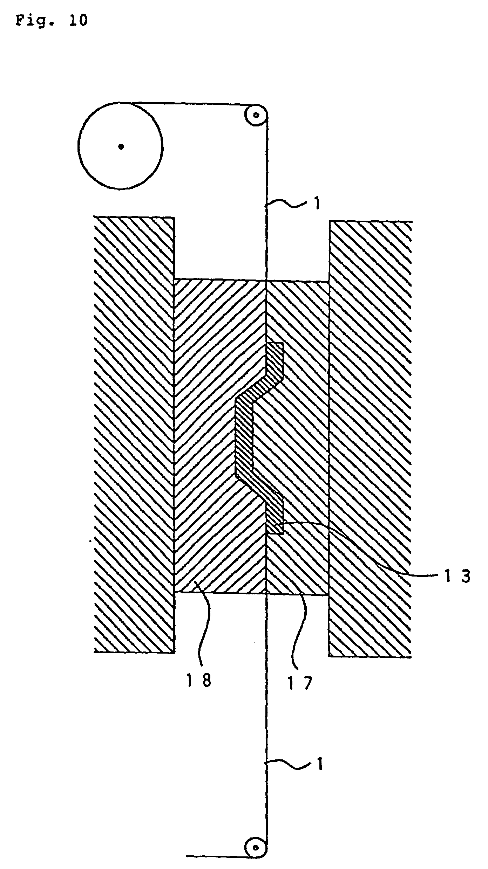

Fig. 10 shows a cross-sectional view of one embodiment of a mold for compression molding with which the production process for the silicone rubber molded article with the design attached according to the present invention is carried out in which view the silicone rubber composition has been supplied;

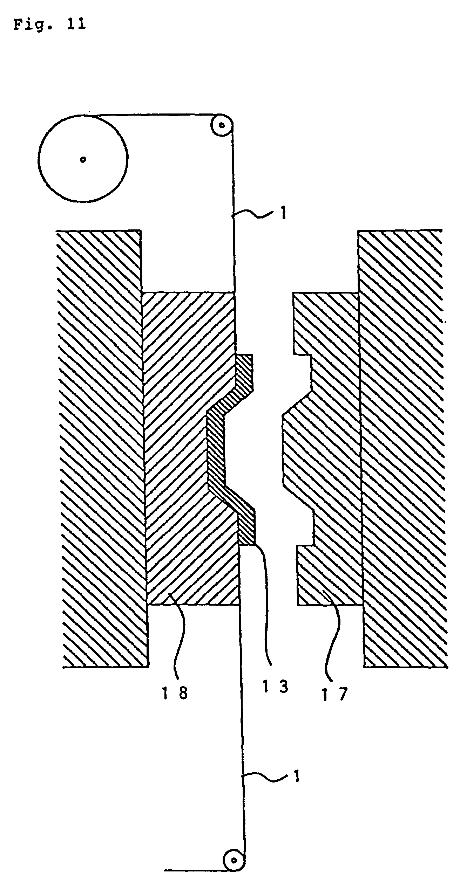

Fig. 11 shows a cross-sectional view of one embodiment of a mold for compression molding with which the production process for the silicone rubber molded article with the design attached according to the present invention is carried out in which view the mold is opened after curing a silicone rubber composition; and

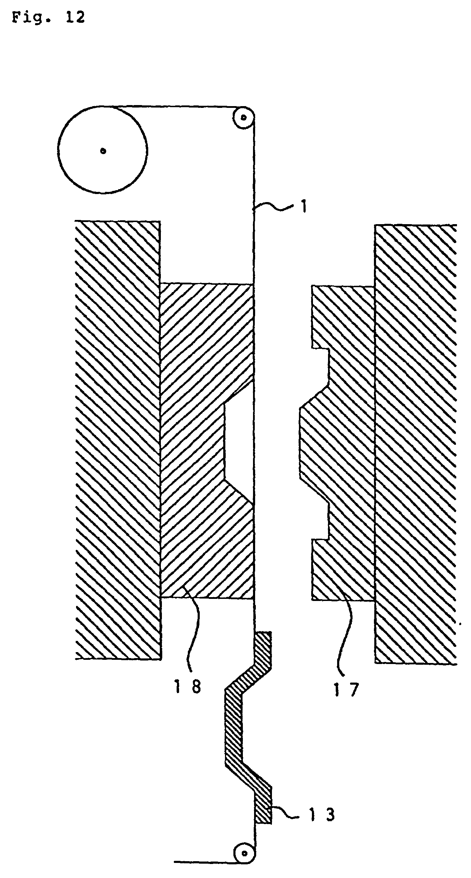

Fig. 12 shows a cross-sectional view of one embodiment of a mold for compression molding with which the production process for the silicone rubber molded article with the design attached according to the present invention is carried out in which view the silicone rubber molded article has been removed from the mold.

In the drawings, the numerals therein indicate the following members, respectively:
- 1:: transfer material
- 2:: movable force of mold for injection molding
- 3:: movable plate of mold for injection molding
- 4:: fixed force of mold for injection molding
- 5:: fixed plate of mold for injection molding
- 6:: clamp for transfer material
- 7:: push bar for transfer material
- 8:: ejector pin
- 9:: ejector plate
- 10:: ejector rod
- 11:: air bush
- 12:: uncured silicone rubber composition
- 13:: silicone rubber molded article
- 14:: substrate sheet
- 15:: release layer
- 16:: design layer
- 17:: top force for compression molding
- 18:: bottom force for compression molding
- 19:: cover film

### Detailed Description of the Invention

In the process according to the present invention, placing of the transfer material or the cover film may be carried out by locating the transfer material or the cover film so as to align the design layer with the article to be molded. That is, the transfer material or the cover film is so placed with respect to the mold that a molded article is finally produced which has the design bonded to a predetermined portion of the article. This is carried out based on a manner which is known to those skilled in the art in the field of molding or printing. For example, the transfer material or the cover film is located onto the mold by aligning the transfer material or the cover film with the mold while reading a resister mark on the transfer material or the cover film and a resister mark on the mold using appropriate sensors.

As described above, the present invention in the second aspect provides the process for the production of the design attached silicone rubber molded article using the transfer material. In one concrete embodiment of the process, the transfer material comprises the substrate sheet and the design layer on at least a portion of one side of the support sheet, so that the design layer (when the design layer is present on the entire of one side of the substrate sheet), or the design layer and a portion of the substrate sheet on which portion the design layer is not present (when the design layer is present on a portion of one side of the substrate sheet) contact the silicone rubber composition in the mold. In this embodiment, at least a portion and preferably the whole of the design layer contains the bond accelerating component. For example, when the design layer is formed on the entire of the one side of the substrate sheet, a portion or the whole of the design layer may contain the bond accelerating component. For example, when the design layer is formed partially on one side of the substrate sheet, a portion or the whole of the design layer may contain the bonding accelerating component.

In a further embodiment of the process according to the present invention in which the transfer material is used, the transfer material may comprise a release layer which is located between the substrate sheet and the design layer. The release layer may be formed on the whole or a portion of the substrate sheet. Thus, in one embodiment, the release layer is formed on the entire of the substrate sheet and the design layer is formed on the whole or a portion of the release layer. In another embodiment, the release layer is formed on a portion of the substrate sheet, and the design layer may be formed on the whole of the release layer or a portion of the release layer and the remaining portion of the substrate sheet on which the release layer is not formed may be coated entirely or partially with a design layer (which may be the same as or different from the design layer on the release layer). In the former embodiment, the whole of the design layer and a portion (if any) of the release layer on which portion no design layer is present contact the silicone rubber composition in the mold, and in the latter embodiment, the whole of the design layer, a portion of the release layer on which the design layer is not present and/or a portion (if any) of the substrate sheet on which neither the design layer nor the release layer is present contact the silicone rubber composition in the mold. Any combination of the layers and portions thereof which contact the silicone rubber composition in the mold or any one of such layers and portions thereof alone may contain the bond accelerating component. Usually, the design layer and/or the release layer or portions thereof which contact the silicone rubber composition in the mold contain the bond accelerating component.

It is noted that the release layer is intended to mean a layer which is separated from the substrate sheet and finally bonds to and remains on the silicone rubber molded article together with the design layer when the silicone rubber molded article is formed.

In a further embodiment of the process according to the present invention in which the transfer material is used, the transfer material may comprise an adhesion layer on at least a portion of the design layer, or on at least a portion of the design layer and at least a portion of the release layer on which the design layer is not present; the adhesion layer, or the adhesion layer and a portion of the design layer on which the adhesion layer is not present and/or a portion of the release layer on which neither the adhesion layer nor the design layer is present contact the silicone rubber material composition in the mold; and at least a portion of the adhesion layer, or at least a portion of the adhesion layer and at least of a portion of the portion of the design layer on which the adhesion layer is not present and/or at least a portion of the portion of the release layer on which neither the adhesion layer nor the design layer is present contain the bond accelerating component. That is, the transfer material may additionally contain the adhesion layer in this embodiment. The adhesion layer may be one which is conventionally used so as to attach a design to a silicone rubber molded article, and which makes bonding possible between a design layer and a silicone rubber molded article. For example, a primer (for example, XP82-B0016 Primer produced by Toshiba Silicone Co., Ltd.) may be used for the adhesion layer, and Japanese Patent Kokai Publication (JP-A) No. 8-294938 describes the adhesion layer and the disclosure of the Patent Publication constitutes a part of the description of the present description by the reference, provided that it is not opposed to the object of the present invention.

In this embodiment, the adhesion layer forms at least a portion of the outermost surface of the transfer material which surface is remote from the substrate sheet, and contacts the uncured silicone rubber composition in the mold. The adhesion layer may be present on a portion or the entire of the design layer, and when a portion of the release layer which portion has no design layer thereon is present, the adhesion layer may be present on a portion or the entire of such a release layer portion, and/or when a portion of the substrate sheet which portion has neither design layer nor the release layer thereon is present, the adhesion layer may be present on a portion or the entire of such a substrate sheet portion.

As described above, the present invention in the first aspect provides the process for the production of the design attached silicone rubber molded material using the cover film. In one concrete embodiment of the process, the cover film comprises the substrate sheet and the design layer on at least a portion of one side of the substrate sheet, so that the design layer (when the design layer is on the entire of the substrate sheet), or the design layer and a portion of the substrate sheet on which portion the design layer is not present (when the design layer is present on a portion of one side of the substrate sheet) contact the silicone rubber composition in the mold; and at least a portion of the design layer contains the bond accelerating component. Thus, the entire of the design layer may contain the bond accelerating component.

In another embodiment of the process for the production of the design attached silicone rubber molded material using the cover film, the cover film comprises an adhesion layer on the outermost surface of a design layer side of the cover film, and the adhesion layer forms a portion or the entire of the outermost surface of one side of the cover film. When the adhesion layer forms the-entire of the outermost surface, only the adhesion layer contacts the silicone rubber material composition upon the molding, and thus at least a portion of such an adhesion layer contains the bond accelerating component. When the adhesion layer forms a portion of the outermost surface, the adhesion layer and a portion of the design layer on which portion the adhesion layer Is not present and/or a portion (if any) of the substrate sheet on which portion neither the adhesion layer nor the design layer is present contact the silicone rubber material composition upon the molding, and thus any combination of these layers or portions thereof or any one of such layers and portions thereof alone may contain the bond accelerating component.

In one embodiment of the present invention, the uncured silicone rubber composition which is used for the silicone rubber molded article according to the present invention may be a liquid silicone rubber composition of an addition reaction type, and which may comprise
component a): a polyorganosiloxane having at least two alkenyl groups per one molecule,
component b): a polyorganohydrogensiloxane having at least two hydrogen atoms per one molecule which bond to the same silicon atom or different silicon atoms, and
component c): a platinum compound.

Preferably, at least one of the number of the alkenyl group per one molecule of component a) and the number of the hydrogen atom which bonds to a silicon atom(s) per one molecule of component b) Is preferably 3 or more on average. Such a silicone rubber composition is a known composition, and silicone rubber compositions described in Japanese Patent Kokoku Publication (JP-B) Nos. 51-28308, 52-39854 and 59-50256 and Japanese Patent Kokai Publication (JP-A) Nos. 54-53164, 8-99332 and 8-118417 may be used in the present invention. The disclosures of these publications constitute parts of the description of the present invention by the references, provided that they are not opposed to the object of the present invention. It is noted that the polyorganohydrogensiloxane of component b) may be the same as the bond accelerating component and vice versa. In the third aspect, the present invention provides the cover film (the transfer material, respectively) each of which can be used for the process of producing the design attached silicone rubber molded article according to the present invention as described above. Any matter which is referred to throughout this description so as to explain the present invention including the production processes as the above and below, and in particular the layered structures of the transfer material and the cover film and materials used are relevant to the transfer material and the cover film of the present invention, provided that such a matter does not opposed to the object of the transfer material and the cover film of the present invention.

Also in the fourth aspect, the present invention provides the design attached silicone rubber molded article which is produced by the process for the design attached silicone rubber molded article according to the present invention as described above. Any matter which is referred to throughout this description so as to explain the present invention including the production processes for the above and below, and in particular the layered structures of the transfer material and the cover film and materials used are relevant to the design attached silicone rubber molded articles of the present invention, provided that such a matter does not opposed to the object of the molded articles the present invention.

Further, in the fifth aspect, the present invention provides the design attached silicone rubber molded article which can be produced by the use of the transfer material or the cover film according to the present invention as described above. Any matter which is referred to throughout this description so as to explain the present invention including the production processes as the above and below, and in particular the layered structures of the transfer material and the cover film and materials used are relevant to the design attached silicone rubber molded articles of the present invention, provided that such a matter does not opposed to the object of the molded articles of the present invention.

Embodiments of the production processes of the present invention will be hereinafter explained in detail with reference to the accompanied drawings, and such explanations are also applicable to the transfer material and the cover film and the molded articles of the present invention.

Firstly, the process for the production of the design attached silicone rubber article is explained wherein the transfer material is used.

For example, the transfer material 1 as shown in Fig. 6 is used. The material 1 comprises the release layer 15 on one side of the substrate sheet 14, and the design layer 16 is formed on the release layer 15. As described in the above, the design layer 16 may be formed on the entire of the release layer 15 (contrary to the shown embodiment). The release layer 15 may be formed on a portion of the substrate sheet 14 (contrary to the shown embodiment). That is, the release layer 15 and the design layer 16 may be present partially or entirely on the substrate sheet 14, and any combination of the partial presence and the entire presence is possible.

When the silicone rubber molded article is formed using such a transfer material 1, the design layer 16 and the exposed portion of the release layer 15 contact the silicone rubber composition in the mold. Therefore, the entire or a portion of the design layer 16 may contain the bond accelerating component, and/or the entire or a portion of the exposed release layer 15 may contain the bond accelerating component. It is of course no problem that a portion of the release layer 15 which portion is not exposed contains the bond accelerating component.

Although not shown, the transfer material 1 may have an adhesion layer (not shown) on a portion or the entire of the exposed release layer portion and/or the design layer 16. In this embodiment, when the adhesion layer Is present entirely on one side of the transfer material, only the adhesion layer contacts the silicone rubber composition in the mold upon the molding, so that a portion or the entire of the adhesion layer contains the bond accelerating component. When the adhesion layer is partially present, since not only the adhesion layer but also the design layer 16 or a portion thereof and/or the exposed release layer 15 or a portion thereof contact the silicone rubber composition in the mold, any combination of these layers or portions thereof or any one of the layers and the portions alone may contain the bond accelerating component.

The substrate sheet 14 is a sheet which supports the design layer 16, and which is separated off from the molded article after the molding. The substrate sheet 14 may comprise the release layer, the adhesion layer and/or a parting layer (which will be explained below) in addition to the design layer 16. For the substrate sheet 14, any material may be used which is used for a substrate sheet of a transfer material used for conventional molding. For example, the following material may be used: a resin sheet (such as a polyphenylene sulfide resin, a polycarbonate resin, a polypropylene resin, a polyethylene resin, a polyamide resin, a polyester resin, an acrylic resin, a polyvinyl chloride resin, and a polyarylate resin sheet), a metal foil (such as an aluminum foil and a copper foil), a cellulose sheet (such as glassine paper, coated paper and cellophane), or a laminate sheet of any two or more thereof. A thickness of the substrate sheet 14 is preferably in the range between 10 and 100 µm, and particularly in the range between 38 and 75 µm.

In order that the substrate sheet 14 is peeled off from the transfer material 1 after molding so that the design layer 16 is separated from the substrate sheet 14, the release layer 15 may be optionally formed partially or entirely on the substrate sheet 14. The release layer 15 is attached to the molded article by molding, and finally constitutes the outermost surface of the molded article 13 so that it can protect the design layer. If the design layer 16 is easily separated from the substrate sheet even when the release layer 15 is absent, the release layer 15 may be eliminated.

When the substrate sheet 14 is not so easily peeled off from the release layer 15, a parting layer may be provided between the substrate sheet 14 and the release layer 15, and the parting layer behaves together with the substrate sheet 14 upon molding. That is, the parting layer is finally not left on the molded article. The release layer 15 is a layer which is peeled off from the substrate sheet 14 (or from the parting layer if any) before, after or during the removal of the molded article from the mold after curing. The release layer 15 becomes the outermost surface of the silicone rubber molded article 13 when the substrate sheet 14 is peeled off. It is noted that when release occurs inside the release layer 15 itself, a surface formed by such release becomes the outermost surface. Also, when release occurs inside the parting layer itself, a surface formed by such release becomes the outermost surface of the silicone rubber molded article 13.

A material for the release layer 15 may be for example an acrylic resin, a polyester resin, a polyvinyl chloride resin, a cellulose resin, a rubber base resin, a polyurethane resin, a polyvinyl acetate resin, and so on. A copolymer such as a vinyl chloride/vinyl acetate copolymer resin and an ethylene/vinyl acetate copolymer resin may be used. The release layer 15 may be colored or uncolored. As a method for the formation of the release layer 15, for example a printing method (such as gravure printing and screen printing) or a coating method (such as gravure coating, roll coating and spray coating) may be used.

The design layer 16 may be formed on the substrate sheet 14 when no release layer is present, or on the release layer 15 when present and/or the exposed portion of the substrate sheet 14. There is no specific limitation as to where the design layer 16 is formed, and the design layer may be partially or entirely formed on one side of the transfer material. The design layer 16 may have any appropriate design.

As a material for the design layer 16, a colored ink may be used which comprises a resin (such as a polyvinyl resin, a polyamide resin, a polyester resin, an acrylic resin, a polyurethane resin, a polyvinyl acetal resin, a polyester-urethane resin, a cellulose ester resin and an alkyd resin) as a binder and a pigment or a dye having an appropriate color as a coloring agent. Particularly, the ink preferably contains the polyurethane resin. As a method for the formation of the design layer 16, for example a printing method (such as gravure printing and screen printing) or a coating method (such as gravure coating, roll coating and spray coating) may be used. Particularly, when multi-color printing and or gradation printing is used, offset printing or gravure printing is suitable.

When the design layer contacts the silicone rubber composition in the mold, at least a portion and preferably the entire of the design layer 16 may contain the bond accelerating component so that the design layer 16 strongly attaches to the surface of the silicone rubber molded article. A content of the bond accelerating component may be in the range between 0.1 and 10 % by weight and preferably between 0.5 and 5 % by weight based on the design layer 16 (when the entire of the design layer contains the component) or on a portion of the design layer (when such a portion contains the component). When the content is smaller than 0.1 % by weight, bond strength between the design layer 16 and the silicone rubber may be insufficient. When the content is larger than 10 % by weight, abrasion resistance of the design layer 16 may be insufficient.

When the design layer 16 is formed partially in the transfer material so that the release layer 15 is partially exposed, and the design layer 16 and the release layer 15 contact the silicone rubber composition in the mold, the bond accelerating component is preferably contained in the design layer 16 and the release layer 15 so as to strongly bond the design layer 16 and the release layer 15 to the silicone rubber surface. If an area of the design layer is relatively smaller than that of the exposed release layer, only the release layer 15 may contain the bond accelerating component. A content of the bond accelerating component in the release layer or a portion thereof which contains the component may be the same as that regarding the design layer as described above. That is, the content of the component may be in the range between 0.1 and 10 % by weight and preferably between 0.5 and 5 % by weight based on the release layer 15 or on a portion of the release layer which portion contains the component. When the content is smaller than 0.1 % by weight, bond strength between the release layer 15 and the silicone rubber may be insufficient. When the content is larger than 10 % by weight, abrasion resistance of the release layer 15 may be insufficient.

Further, the adhesion layer (not shown) may be provided which forms the outermost surface on the design layer side of the substrate sheet. The adhesion layer is a layer which functions to bond the design layer 16 and/or the release layer 15 to the silicone rubber molded article 13. For the adhesion layer, a pressure sensitive resin or a heat sensitive resin may be properly used. For example, the following may be used: an organic solution of a titanic acid ester, a carbon functionalized silane or a mixture thereof, a polyurethane resin, a polyester resin, an ethylene/vinyl acetate copolymer resin, a polyvinyl chloride resin, an acrylic resin, a butyral resin and an acetal resin which may contain a silane compound such as an alkoxysilane and a chlorosilane.

In order to accelerate the bond between the adhesion layer and the silicone rubber molded article, the adhesion layer may contain the bond accelerating component when the transfer layer has the adhesion layer. An amount of the bond accelerating component in the adhesion layer or a portion thereof which contains the component may be the same as that regarding the design layer 16 as described above. That is, the content of the component may be in the range between 0.1 and 10 % by weight and preferably between 0.5 and 5 % by weight based on the adhesion layer 16 or on a portion of the adhesion layer which portion contains the component. When the content is smaller than 0.1 % by weight, bond strength between the adhesion layer and the silicone rubber may be insufficient. When the content is larger than 10 % by weight, abrasion resistance of the adhesion layer may be insufficient. As a method for the formation of the adhesion layer, for example a printing method (such as gravure printing and screen printing) or a coating method (such as gravure coating, roll coating and spray coating) may be used. In the case wherein the adhesion layer is present, when the adhesion layer is present on the entire of the design layer side of the transfer material and both or either the design layer 16 and/or the release layer 15 is not exposed at all, or when an area of an exposed portion of the design layer 16 and/or the release layer 15 is small, it may be sufficient that only the adhesion layer contains the bond accelerating component. To the contrary, when an area of the adhesion layer is small relative to an area of other exposed potion(s), and such an exposed portion can have a sufficient adhesion function by containing the bond accelerating component, the adhesion layer does not necessarily contain the bond accelerating component.

The transfer material 1 as described above is located between forces of the mold which has been temperature controlled (see Figs. 1 and 9). As the mold, those for injection molding, silicone rubber molding (for example a mold for a liquid injection molding), press or compression molding, molding simultaneously with transferring and so on may be used. The mold may be made of a rubber or a plastic in place of a metal if possible.

In order to control a mold temperature, a manner in which water or oil is conventionally used as a heating medium, a manner in which a cartridge heater is used or combination thereof may be used. The temperature control of the mold is so carried out that a portion or the entire of the mold surface is kept at a predetermined temperature In the range of 60-220 °C and preferably 80-200 °C.

The transfer material 1 may be in the form of a leaf sheet or an elongated continuous sheet (as shown in the drawings). When the transfer material 1 is located and fixed at a predetermined state in the mold, the leaf sheet may be supplied to the mold piece by piece. When the transfer material 1 is in the form of the continuous sheet, a necessary part of the material is supplied to into the mold intermittently. For example, when the transfer material 1 is in the continuous sheet, a register mark of the design layer 16 of the transfer material 1 and another resister mark on the mold may be aligned with each other. When the transfer material 1 is supplied intermittently, a position of the transfer material 1 is detected using a sensor and then the material 1 is fixed by a movable force 2 and a fixed force 4, which manner allows the transfer material 1 to be fixed always at the same position and no positional deviation of the design layer 16 is conveniently avoided.

The transfer material may be placed in the cavity of the mold or it may be closely contacted with a cavity inner surface of the mold by means of vacuum. The transfer material 1 may be preformed so as to have a concave and/or a convex portions which correspond to those of the cavity inner surface.

Then, the uncured silicone rubber composition 12 is supplied into and fill the cavity of the mold (see Figs. 2 and 10). The silicone rubber composition is supplied onto the design layer 16 side of the transfer material 1.

As to the silicone rubber composition, any conventionally used silicone rubber composition such as those described above with reference to the Patent Publications may be used.

An example of the silicone rubber composition which may be used is a liquid silicone rubber composition of the addition reaction type as described above which comprises components a), b) and c). In order to form a molecular structure in the form of network by the reaction of components a) and b), at least one of the number of the alkenyl group per one molecule of component a) and the number of the hydrogen atom which bonds to a silicon atom(s) per one molecule of component b), and preferably the latter number is not less than 3 (including 3), and more preferably not less than 4 on average, which provides with good curing properties more suitable for molding and an improved rubbery elastic article as well as improves the bond strength to the design layer and so on.

As to component a), the following are relevant: The alkenyl group may be vinyl, allyl, 1-butenyl, 1-hexyenyl group and so on. From view points of synthesis ease, fluidity before curing and less damage on heat resistance after curing of the composition, vinyl group is the most preferable. Other organic group which bonds to a silicon atom of component a) may be an alkyl group such as a methyl, ethyl, propyl, butyl, pentyl, hexyl, octyl, decyl and dodecyl group; an aryl group such as a phenyl group; an aralkyl group such as 2-phenylethyl and 2-phenylpropyl group; and a substituted hydrocarbon group such as a chloromethyl, chlorophenyl and 3,3,3-trifluoropropyl group. Among them, a methyl group is the most preferable as the organic group from a view point of property balance of mechanical strength, fluidity before curing and so on.

A siloxane structure (or skeleton) of component a) may be linear or branched. In order to improve mechanical properties after curing of the composition and also to adapt to molding which produces an article having a complicated shape, a linear polyorganosiloxane and a branched polyorganosiloxane are used preferably in a mixture thereof. The alkenyl group may be present either/both at an end or/and on a side of a polysiloxane chain. In order to give improved mechanical properties after curing of the composition, the alkenyl group may be preferably present at least at the both ends of the chain when the polyorganosiloxane is linear.

Although a polymerization degree of component a) is not particularly limited, the component a) has a viscosity of preferably 500 to 500000 cP and more preferably 1000 to 100000 cP at a temperature of 25 °C so as to have good fluidity and workability before curing of the composition and appropriate elasticity after curing of the composition.

The polyorganohydrogensiloxane of component b) functions as a curing agent which carries out the addition reaction of a hydrosilyl group (∼Si-H) contained therein to the alkenyl group (∼Si-CH=CH₂) of component a). A siloxane structure of component b) may be linear, branched or cyclic. An organic group which bonds to a silica atom of a siloxane unit may be the same as that of the other organic group of component a) except the alkenyl group. Among them, a methyl group is the most preferable because of ease of synthesis.

A polymerization degree of component b) is not particularly limited. Since it is difficult to synthesize a polyorganohydrogensiloxane which contains two or more hydrogen atoms which bond to the same silicon atom, the polyorganohydrogensiloxane preferably has at least three siloxane units so as to obtain a molded article having improved properties by the formation of network structure by means of curing.

Component b) may be so blended with component a) that the number of a hydrogen atom which bonds to a silicone atom of component b) per one alkenyl group of component a) is preferably in the range between 0.5 and 5 and more preferably in the range between 1 and 3. When the number of the hydrogen atom is less than 0.5, curing is not completed. When the number is greater than 5, not only compression set of the molded article is increased but also foaming is likely to occur during curing so that the molded article may have less good surface conditions.

When the silicone rubber composition 12 contains component a) as described above and a layer or a portion thereof which contacts the silicone rubber composition 12 in the mold contains the polyorganohydrogensiloxane containing at least two hydrogen atoms which bond to the same or different silicon atoms per one molecule, the polyorganosiloxane of the silicone rubber composition 12 and the polyorganohydrogensiloxane contained in the layer or the portion thereof which contacts the silicone rubber composition 12 react with each other and function as a primer so that the layer which contacts the silicone rubber composition 12 is strongly bonded onto the silicone rubber molded article 13.

The platinum compound of component c) is catalyst which promotes the addition reaction of the alkenyl group of component a) to the hydrosilyl group of component b), and is effective in that it has a good catalyst ability to cure particularly at a normal temperature. As the platinum compound, the following may be used: platinum black, chloroplatinic acid, a reaction product of chloroplatinic acid and an alcohol (such as 2-propanol) (i.e. an alcohol modified product), a complex of chloroplatinic acid with an olefin, an aldehyde, a vinylsiloxane or an acetylenic alcohol, a platinum-olefin complex, a platinum-vinylsiloxane complex, and a platinum-phosphine complex. From view points of solubility of component a) into component b) and good catalyst activity, the reaction product of chloroplatinic acid and the alcohol (such as 2-propanol) and the platinum-vinylsiloxane complex are particularly preferable.

A content of component c) is in the range between 0.1 and 500 ppm, and preferably between 1 and 100 ppm by weight of platinum atom based on component a). When the content is less than 0.1 ppm by weight, a curing rate is slow so that a cycle period of the molding may be ineffectively extended. On the other hand, when the amount is greater than 500 ppm by weight, the curing rate is excessively fast, workability of the composition after blending components thereof is adversely affected, which is not economical.

In order to adjust fluidity of such a liquid silicone rubber composition comprising components a), b) and c) and also to improve mechanical properties of the silicone rubber molded article 13, the composition may usually comprise a filler. As the filler, there are for example a reinforcing filler such as precipitated silica, fumed silica, calcined silica, silica aerogel, and fumed titanium oxide; and a non-reinforcing filler such as ground quartz, diatom earth, aluminosilicate, zinc oxide, iron oxide and calcium carbonate. The filler may be used as it is or its surface may be treated with an organic silicon compound such as hexamethylsilazane or a polymethylsiloxane. Also, in order to suppress curing of the silicone rubber composition 12 at a room temperature so that its storage stability and workability are improved, the composition may comprise a curing retardant such as an acetylenic alcohol compound, a low molecular weight siloxane compound containing a vinyl group, a dially maleate, trially isocyanurate, a nitrile compound or an organic peroxide. When the silicone rubber composition contains silica, particularly finely divided silica, its specific surface area is preferably not smaller than 50 m²/g, and its amount is preferably 5 to 60 parts by weight per 100 parts by weight of component a). The silica having a specific surface area not smaller than 50 m²/g further reinforces the silicone rubber. When the specific area is smaller than 50 m²/g, sufficient reinforcement may not be provided for the silicone rubber. As an example of such silica, Aerosil 130, 200, 300 and R-972 (produced by NIPPON AEROSIL Co., Ltd.) may be used.

Further, the silicone rubber may contain a coloring agent such as an inorganic pigment and an organic dye, a heat resistant improving agent such as cerium oxide, zinc carbonate, manganese carbonate, red ocher, titanium oxide and carbon black, and a flame retardant.

From view points of good molding properties with being transferred, a large curing rate by means of heating, and good uniformity of curing, the silicone rubber composition used in the present invention is suitably of the addition reaction type or a curing type with an organic peroxide, but is not limited thereto. For example, a silicone rubber composition may be of a curing type of a condensation reaction at a room temperature.

It is to be noted that components a) and b) may be more concretely expressed as following components A) and B), respectively:
A) a polyorganosiloxane which contains at least one siloxane unit of: R¹ₐR²_{b}SiO_{[4-(a+b)]/2} (wherein R¹ is an alkeny group, R² is a substituted or non-substituted mono valent hydrocarbon group without an aliphatic unsaturated bond, a is an integer from 1 and 3, b is an integer from 0 to 2, and a+b is an integer from 1 to 3) and which also contains at least two R¹; and
B) a polyorganohydrogensiloxane which contains at least one siloxane unit of: R³_{c}H_{d}SiO_{[4-(c+d)]/2} (wherein R³ is a substituted or non-substituted mono valent hydrocarbon group, c is an integer from 0 and 2, d is an integer from 1 to 3, and c+d is an integer from 1 to 3).

It is noted that when cold temperature resistance is further necessary after curing of the composition, a small amount of a phenyl group may be added as R² in component a), and/or when oil resistance is further necessary after curing of the composition, a small amount of a 3,3,3-trifluoropropyl group may be added as R² in component a).

When the silicone rubber component of the addition reaction type is practically used according to the present invention and a curing period is to be adjusted, a curing reaction controlling agent may be selected from the following and used: a vinyl group containing organopolysiloxane such as vinylcyclotetrasiloxane, triallyl isocyanate, an alkyl maleate, an acetylenic alcohol and its modified product with a silane or a siloxane; a hyrdoperoxide; tetramethylethylenediamine; benzotriazole; and a mixture thereof.

The silicone rubber composition 12 as described above is supplied into the mold and fill the cavity thereof, and then the composition is cured to form the molded article 13 simultaneously with bonding the transfer layer including the design layer 16 of the transfer material 1 to the surface of the article.

Curing of the silicone rubber composition proceeds at a normal temperature, but curing is carried out at a predetermined temperature which is below a melting point of the transfer material 1 and which is preferably between 60 and 220 °C, and more preferably between 80 and 200 °C. When the curing temperature is below 60 °C, curing takes a long time. When the curing temperature is above 220 °C, scorch may occur. Further, when the curing temperature is above the melting point of the transfer material 1, the substrate sheet 14, the design layer 16 and so on which constitute the transfer material 1 are melted, which is not desirable. It is noted that if heating period is short, the transfer material 1 is not melted even when the heating temperature is above the melting point.

Finally, the mold is opened (see Figs. 3 and 11) after curing of the silicone rubber composition 12, and the molded article 13 with the design attached is removed from the mold (see Figs. 4 and 12). It is noted that the transfer material 1 may be elongated and the removal of the transfer material 1 and the silicone rubber molded article 13 from the mold may be carried out continuously.

Next, the production process of the silicon rubber molded article with the design attached using the cover film 19 will be explained below.

The cover film 19 which is used according to the present invention comprises the design layer 16 which is formed on one side of the substrate sheet 14 (see Fig. 8). In the shown embodiment, the design layer 16 is formed partially on the substrate sheet 14, but it may be formed on the entire of the one side of the substrate sheet 14.

As a material for the substrate sheet 14, cloth, natural leather, synthetic leather and paper may be used in addition to those for the transfer material as described above. A thickness of the substrate sheet 14 is preferably in the range between about 10 µm and 1.0 mm. In particular, the thickness is frequently in the range between about 25 µm and 200 µm.

The substrate sheet 14 may be transparent with or without a color, or may be opaque. A material containing an appropriate pigment or dye as a coloring agent may be used for a colored substrate sheet 14.

As a material for the design layer 16, the material which is the same as those for the design layer of the transfer material may be used. The formation manner of the design layer of the cover film may be the same as those in the case of the transfer material.

In order to strongly bond such a design layer 16 to the surface of the silicone rubber molded article, the design layer 16 or a portion thereof contains the bond accelerating component, of which content in the design layer 16 or the portion thereof may be the same as that in the case of the transfer material 1.

Also, as in the case of the transfer material, the adhesion layer (not shown) may be optionally provided. The adhesion layer may be formed as in the case of the transfer material 1. It is noted as in the case of the transfer material that when the adhesion layer constitutes most and preferably substantially all of the outermost surface of one side of the cover film, the design layer 16 does not necessarily contain the bond accelerating component.

Using the cover film 19 as described above, the silicone rubber molded article is produced. This production of the molded article may be the same as the production of the molded article using the transfer material described above except that the transfer material is replaced with the cover film.

In the silicone rubber molded article produced according to the present process, since the design layer strongly bonds to the silicone rubber molded article with the design attached, for example the article is extremely useful for a keyboard in addition to for gasket or packing.

It is noted that dimensions of the members (such as various layers) which constitute the transfer material and the cover film are not particularly limited but easily determined by those skilled in the art depending on their applications, and that "partially (partial)" and "entirely (entire, whole)" are used in the description with respect to one side of a member in question.

### Effect of the Invention

The design is strongly bonded to the surface of the silicone rubber molded article according to the present invention by blending the polyorganohydrogensiloxane having at least two hydrogens which bonds to a silicon atom or silicon atoms or the alkoxysilane having an unsaturated bond such as vinyltriethoxysilane in the layer of the transfer material or the cover film which layer is in contact with the silicone rubber composition when molding.

### Examples

The present invention will be hereinafter described in detail by way of examples, to which the present invention is not limited.

### Example 1

An "ALLROUNDER 320 M/H/D750-210" made by ARBURG Co., Ltd. was used as the injection molding machine for use with liquid silicone rubber composition, and the installed metal mold was heated to 140 °C by a heating controller and a 2KM-900 made by DOPAG Co., Ltd. was used as the pump which supplied the liquid silicon rubber composition to the injection molding apparatus. Also, TLM1405 made by Toshiba Silicone Co., Ltd. was used as the liquid silicone rubber composition of the addition reaction type.

A transfer material was prepared by forming on a substrate sheet made from 25 µm thick polyethylenephthalate film a release layer made from a methacrylate type resin, and a design layer made from an urethane-polyester copolymer resin containing one percent by weight of methylhydrogensiloxane as a polyorganohydrogensiloxane (TSF484, manufactured by Toshiba Silicone Co., Ltd) and containing 5 colors of pigment (red, blue, yellow, white, black). This transfer material was affixed in position in the metal mold.

Then, the mold was closed (see Fig. 1), and under the conditions given below the uncured silicone rubber composition was injected into the cavity inside the metal mold (see Fig. 2), and after the silicone rubber composition had cured, the metal mold was opened and a molded silicone rubber article with the transfer material firmly affixed was taken out of the metal mold. At this time, at the same time as the molded silicone rubber article was pushed out with the ejector pin (see Fig. 3), the transfer material was pulled out of the cavity (see Fig. 4).

| Conditions: | |
|---|---|
| Injection Pressure | 20 kgf/cm² |
| Injection Time | 10 sec |
| Time Pressure Maintained | 5 sec |
| Curing Time | 35 sec |
| Overall Molding Time | 60 sec |
| Metal Mold Temperature | 150 °C |
| Mold Closing Pressure | 30 t |
| Cylinder Temperature | 15 °C |

Finally, when the substrate sheet of the transfer material was peeled off, a molded silicone rubber article with a design attached was obtained (see Fig. 5).

By the above example, it was clarified that a molded silicone rubber article with a design attached can easily be removed from a metal mold. Also, the silicone rubber article after the substrate sheet has been peeled off did not have any burr.

### Comparative Example 1

Apart from the omission of methylhydrogensiloxane oil in the formulation for the design layer, this comparative example was conducted in the same manner as Example 1, and the uncured silicone rubber composition was injected into the cavity inside the metal mold, and after the silicone rubber composition had cured, the metal mold was opened and a silicone rubber molded article with the transfer material firmly affixed was taken out of the metal mold. At this time, at the same time as the molded silicone rubber article was pushed out with the ejector pin, the transfer material was pulled out of the cavity.

Finally, when the substrate sheet of the transfer material was peeled off, the design layer remained attached to the substrate sheet and the design layer was not transferred onto the surface of the silicone rubber.

### Comparative Example 2

This comparative example was conducted in the same manner as Example 1 except that no transfer material was used and the uncured silicone rubber composition was injected into the cavity in the metal mold and after the molded silicone rubber article had been obtained, screen printing on the surface of the molded silicone rubber article by means of an addition reaction type silicone ink was conducted and the silicone ink was additionally heated to cure it and form a design. The design made by the silicone ink was not firmly affixed to the molded silicon rubber article and peeled off.

### Example 2

A press molding equipment was used, and the installed metal mold was heated to 130 °C with heating controller, and the silicone rubber composition used was a formulation in which 0.5 % by weight of an organic peroxide curing agent (TC-8, Toshiba Silicone Co., Ltd.) was contained in a millable silicone rubber composition (TSE221-5U, Toshiba Silicone Co., Ltd.).

A transfer material was prepared by forming on a basic sheet made from 25 µm thick polyethylenephthalate film a release layer made from a methacrylate resin, a design layer made from an urethane-polyester copolymer resin formulated with 1 % by weight of vinyltriethoxysilane (TLM8311, manufactured by Toshiba Silicone Co., Ltd) and containing 5 colors of pigment (red, blue, yellow, white, black). The transfer material was affixed in position in the metal mold (see Fig. 9).

Then, the mold was closed with the silicone rubber placed inside the metal mold, and under the conditions given below it was compression molded (see Fig. 10) and after the silicone rubber composition had cured the metal mold was opened (see Fig. 11), and a shaped silicone rubber article with the transfer material firmly affixed was taken out of the metal mold (see Fig. 12).

| Conditions | |
|---|---|
| Metal Mold Temperature | 130 °C |
| Curing Time | 300 sec |

Finally, when the substrate sheet of the transfer material was peeled off, a molded silicone rubber article with a design attached was obtained (see Fig. 5).

### Comparative Example 3

This comparative example was conducted in the same manner as Example 2 to form the silicon rubber article except that no transfer material was used, and a red pigmented silicone ink was used for screen printing on the surface of the molded silicon rubber article and the silicone ink was heated (120°C, 30 sec) to cure it. Then, using the same printing process, blue, yellow, white and black silicone inks were printed on the silicone rubber article in that order.

A piece of metal weighing 300 g and wrapped in polyester cloth was slid over the surfaces of each of the molded silicone rubber articles with a design attached which were prepared in Examples 1 and 2 and Comparative Example 3, and tested to check a number of the sliding cycles when abrasions of the design appeared. The results are shown in the Table below.

| Example 1 | Example 2 | Comparative Example 3 |
|---|---|---|
| No abrasions after 100,000 cycles | No abrasions after 100,000 cycles | Abrasions appear after 5,000 cycles |

### Example 3

A compress molding equipment was used, and the installed metal mold was heated to 170 °C with a heating controller, and the silicone rubber composition used was a formulation in which 0.5 and 2.0 % by weight of addition reaction type curing agents XC92-B2428 and XC92-B2429 (both produced by Toshiba Silicone Co., Ltd.) respectively were contained in a millable silicone rubber composition (TSE221-5U, Toshiba Silicone Co., Ltd.).

As the transfer material, a molded transfer material was prepared by forming on a basic sheet made from 25 µm thick polyethylenephthalate film a release layer made from a methacrylate type resin, a design layer made from an urethane-polyester copolymer resin formulated with 1 % by weight of methylhydrogensiloxane as a polyorganohydrogensiloxane (TSF484, manufactured by Toshiba Silicone Co., Ltd.) and containing 5 colors of pigment (red, blue, yellow, white, black). The transfer material was affixed in position in the metal mold (see Fig. 9).

Then, the mold was closed with the silicone rubber composition placed inside the metal mold, and under the conditions given below it was composition molded (see Fig. 10) and after the silicone rubber composition had cured, the metal mold was opened (see Fig. 11) and a molded silicone rubber article with the transfer material firmly affixed was taken out of the metal mold (see Fig. 12).

| Conditions: | |
|---|---|
| Metal Mold Temperature | 170 °C |
| Curing Time | 300 sec |

Finally, when the substrate sheet of the transfer material was peeled off, a molded silicone rubber article with a design attached was obtained (see Fig. 5).

### Comparative Example 4

Apart from the omission of vinyltriethoxysilane in the formulation for the design layer, the comparative example was conducted in the same manner as Example 3, and the uncured silicone rubber composition was injected to fill the cavity inside the metal mold, and after the silicone rubber composition had cured the metal mold was opened, and a molded silicone rubber article with the transfer material firmly affixed was taken out of the metal mold.

Finally, when the substrate sheet of the transfer material was peeled off, the design layer remained attached to the substrate sheet and the design layer was not transferred onto the surface of the silicon rubber.

### Example 4

On a basic sheet made from 25 µm thick polycarbonate film, a design layer was made from inks each consisting of an urethane-vinyl copolymer resin formulated with 2 % by weight of methylhydrogensiloxane as a polyorganohydrogensiloxane, and one of 5 colors of pigment (red, blue, yellow, white, black) by screen printing in turn so that a cover film was obtained.

Then, the cover film was affixed in the metal mold, and the mold closed. The uncured silicone rubber composition was injected into the cavity inside the metal mold, and after the silicone rubber composition had cured, the metal mold was opened and a molded silicone rubber article with the cover film firmly affixed to the molded silicone rubber article was taken out of the metal mold. At this time, at the same time as the molded silicone rubber article was pushed out with the ejector pin (see Fig. 3), the cover film was pulled out of the cavity and a molded silicone rubber article with a design attached was obtained.

### Comparative Example 5

Apart from the omission of methylhydrogensiloxane from the formulation for the design layer, this comparative example was conducted in the same manner as Example 4 and the molded silicone rubber article was made. At the time the molded silicone rubber article was removed from the cavity, when the cover film was pulled away from the cavity, then the molded silicone rubber article remained in the cavity, and the cover film peeled away from the surface of the molded silicone rubber article.

### Example 5

On a substrate sheet made from 40 µm thick urethane film, a design layer made from five inks each consisting of an urethane resin formulated with 1 % by weight of methylhydrogensiloxane and one of 5 colors of pigment (red, blue, yellow, white, black) by screen printing in turn to make a cover film.

Then, the cover film was affixed in the metal mold, and the mold closed. The addition reaction type liquid silicone rubber composition (TLM1405, Toshiba Silicone Co., Ltd.) was injected using the ALLROUNDER 320M/H/D 750-210 made by ARBURG Co., Ltd. and a molded silicone rubber article with a design attached was obtained.

The molded silicone rubber article with a design attached obtained in this way had the cover film strongly attached to the molded silicone rubber article. Also, when measuring the adhesion strength between the cover film and the molded silicone rubber article, it advantageously was 100 % cohesive failure at 55 kgf/cm² as to the article produced under the molding time of 120 sec.

## Claims

1. A process of producing a silicone rubber molded article with a design attached comprising the steps of:
placing onto a mold a cover film which comprises a substrate sheet and a design layer which is located on at least a portion of one side of the substrate sheet, and
supplying an uncured silicone rubber composition into a cavity of the mold on a design layer side and curing the composition so that a silicone rubber molded article which is integrated with the cover film is formed,
**characterized in that** at least a portion of the cover film except the substrate sheet which portion contacts with the silicone rubber composition in the mold contains, as a bond accelerating component, at least one compound selected from the group consisting of alkoxysilanes containing at least one unsaturated bond and polyorganohydrogensiloxanes containing at least two hydrogen atoms which bond to the same silicon atom or different silicon atoms.

2. The process according to claim 1 further comprising the step of:
separating off the substrate material from the silicone rubber molded article which is integrated with the cover film.

3. The process according to claim 2 wherein the separating off step of the substrate sheet comprises the steps of:
opening the mold after curing the silicone rubber composition and taking out the silicone rubber molded article which is integrated with the cover film from the mold, and
peeling the substrate sheet off the silicone rubber molded article which is integrated with the cover film so as to obtain the silicone rubber molded article with the design attached.

4. The process according to claim 2 wherein the separating off step of the substrate sheet comprises the steps of:
opening the mold after curing the silicone rubber composition and peeling the substrate sheet off the silicone rubber molded article which is integrated with the cover film so that the silicone rubber molded article with the design attached is left in the mold, and
taking out the silicone rubber molded article with the design attached from the mold.

5. The process according to claim 2 wherein the separating off step of the substrate sheet comprises the step of opening the mold after curing the silicone rubber composition and taking the silicone rubber molded article with the design attached while peeling the substrate sheet off the silicone rubber molded article which is integrated with the cover film.

6. The process according to any of claims 1 to 5, wherein the alkoxysilanes include triethoxyvinylsilane, tris(2-methoxyethoxy)vinylsilane and 3-methacryloxypropyltrimethoxysilane.

7. The process according to any of claims 1 to 6, wherein placing of the cover film is carried out by locating the design layer such that it is aligned with the molded article.

8. The process according to any one of claims 1 to 7, wherein the design layer, or the design layer and a portion of said one side of the substrate sheet on which portion no design layer is present contact the silicone rubber composition in the mold, and
at least a portion of the design layer contains the bond accelerating component.

9. The process according to any one of claims 2 to 7, wherein the cover film further comprises a release layer located between the substrate sheet and the design layer,
the design layer, or the design layer and a portion of the release layer on which portion no design layer is present contact the silicone rubber composition in the mold,
at least a portion of the design layer and/or a portion of the release layer contain the bond accelerating component, and
the release layer remains on the silicone rubber molded article together with the design layer when the substrate sheet is separated off after curing of the silicone rubber composition.

10. The process according to any one of claims 1 to 9, wherein the cover film further comprises an adhesion layer on at least a portion of the design layer, or on at least a portion of the design layer and at least a portion of the substrate sheet on which portion no design layer is present,
the adhesion layer, or the adhesion layer and a portion of the design layer on which portion no adhesion layer is present and/or a portion of the substrate sheet on which portion neither the adhesion layer nor the design layer is present contact the silicone rubber material in the mold, and
at least a portion of the adhesion layer, or at least a portion of the adhesion layer and at least a portion of the design layer on which portion no adhesion layer is present and/or at least a portion of the release layer on which portion neither the adhesion layer nor the design layer is present contain the bond accelerating component.

11. The process according to any one of claims 1 to 10, wherein the uncured silicone rubber composition is a liquid silicone rubber composition of an addition reaction type, and comprises
component a): a polyorganosiloxane which contains at least two alkenyl groups per one molecule;
component b): a polyorganohydrogensiloxane which contains at least two hydrogen atoms per one molecule which bond to the same silicon atom or different silicon atoms; and
component c): a platinum compound, and
preferably at least one of the number of the alkenyl group per one molecule of component a) and the number of a hydrogen atom which bonds to a silicon atom(s) per one molecule of component b) is not less than 3 on average.

12. The process according to any one of claims 1 to 11 wherein a content of the bond accelerating component is in the range between 0.1 and 10 % by weight based on a portion which contains the component.

13. A cover film used for the production of a silicone rubber molded article with a design attached which comprises a substrate sheet and a design layer which is located on at least a portion of one side of the substrate sheet, and which is **characterized in that** at least a portion of the cover film except the substrate sheet which portion contacts with the silicone rubber composition in the mold contains, as a bond accelerating component, at least one compound selected from the group consisting of alkoxysilanes containing at least one unsaturated bond and polyorganohydrogensiloxanes containing at least two hydrogen atoms which bond to the same silicon atom or different silicon atoms.

14. The cover film according to claim 13, wherein the alkoxysilanes include triethoxyvinylsilane, tris(2-methoxyethoxy)vinylsilane and 3-methacryloxypropyltrimethoxysilane.

15. The cover film according to claim 13 or 14, wherein the design layer, or the design layer and a portion of said one side of the substrate sheet on which portion no design layer is present contact the silicone rubber composition in the mold, and
at least a portion of the design layer contains the bond accelerating component.

16. The cover film according to any one of claims 13 to 15, wherein the cover film further comprises a release layer located between the substrate sheet and the design layer,
the design layer, or the design layer and a portion of the release layer on which portion no design layer is present contact the silicone rubber material in the mold,
at least a portion of the design layer and/or a portion of the release layer contain the bond accelerating component, and
the release layer remains on the silicone rubber molded article together with the design layer when the substrate sheet is separated off after curing of the silicone rubber composition.

17. The cover film according to any one of claims 13 to 16, wherein the cover film further comprises an adhesion layer on at least a portion of the design layer, or on at least a portion of the design layer and at least a portion of the substrate sheet on which portion no design layer is present,
the adhesion layer, or the adhesion layer and a portion of the design layer on which portion no adhesion layer is present and/or a portion of the substrate sheet on which portion neither the adhesion layer nor the design layer is present contact the silicone rubber material in the mold, and
at least a portion of the adhesion layer, or at least a portion of the adhesion layer and at least a portion of the design layer on which portion no adhesion layer is present and/or at least a portion of the release layer on which portion neither the adhesion layer nor the design layer is present contain the bond accelerating component.

18. The cover film according to any one of claims 13 to 17, wherein a portion which contacts the uncured silicone rubber composition contains at least an urethane resin.

19. A silicone rubber molded article with a design attached which is produced according to any process of claims 1 to 12.

20. A silicone rubber molded article with a design attached which is produced using any cover film of claims 13 to 18.

## Patentansprüche

1. Verfahren zur Herstellung eines geformten Silicongummiartikels mit daran angebrachter Darstellung, das die folgenden Schritte umfasst:
Plazieren einer Abdeckfolie, die ein Substratblatt und eine Darstellungsschicht umfasst, die auf zumindest einem Teil einer Seite des Substratblattes befindlich ist, auf eine Form, und
Zuführen einer ungehärteten Silicongummi-Zusammensetzung in den Formhohlraum auf der Darstellungsschichtseite und Aushärten der Zusammensetzung, so dass ein geformter Silicongummiartikel gebildet wird, der mit der Abdeckfolie verbunden ist,
**dadurch gekennzeichnet, dass** mindestens ein Teil der Abdeckfolie ausser dem Substratblatt, das mit der Silicongummi-Zusammensetzung in der Form kontaktiert ist, als eine Bindungsbeschleunigungskomponente mindestens eine Verbindung enthält, die ausgewählt ist aus Alkoxysilanen, die mindestens eine ungesättigte Bindung enthalten, und Polyorganohydrogensiloxanen, die mindestens zwei Wasserstoffatome enthalten, die an das gleiche Siliciumatom oder unterschiedliche Siliciumatome gebunden sind.

2. Verfahren gemäss Anspruch 1, das ferner den Schritt des Abtrennens des Substratmaterials von dem geformten Silicongummiartikel, der mit der Abdeckfolie verbunden ist, umfasst.

3. Verfahren gemäss Anspruch 2, worin der Schritt des Abtrennens des Substratblattes die folgenden Schritte umfasst:
Öffnen der Form nach dem Aushärten der Silicongummi-Zusammensetzung und Herausnehmen des geformten Silicongummiartikels, der mit der Abdeckfolie verbunden ist, aus der Form, und
Abschälen des Substratblattes von dem mit der Abdeckfolie verbundenen geformten Silicongummiartikel, so dass der geformte Silicongummiartikel mit anhaftender Darstellung erhalten wird.

4. Verfahren gemäss Anspruch 2, worin der Schritt des Abschälens des Substratblattes die folgenden Schritte umfasst:
Öffnen der Form nach dem Aushärten der Silicongummi-Zusammensetzung und Abschälen des Substratblattes von dem geformten Silicongummiartikel, der mit der Abdeckfolie verbunden ist, so dass der geformte Silicongummiartikel mit der daran angebrachten Darstellung in der Form zurückbleibt, und
Entnehmen des geformten Silicongummiartikels mit der darauf aufgebrachten Darstellung aus der Form.

5. Verfahren gemäss Anspruch 2, worin der Schritt des Abtrennens des Substratblattes den Schritt des Öffnens der Form nach dem Aushärten der Silicongummi-Zusammensetzung und die Entnahme des geformten Silicongummiartikels mit darauf aufgebrachter Darstellung unter Abschälen des Substratblattes von dem geformten Silicongummiartikel, der mit der Abdeckfolie verbunden ist, umfasst.

6. Verfahren gemäss mindestens einem der Ansprüche 1 bis 5, worin die Alkoxysilane Triethoxyvinylsilan, Tris(2-methoxyethoxy)vinylsilan und 3-Methacryloxypropyltrimethoxysilan einschliessen.

7. Verfahren gemäss mindestens einem der Ansprüche 1 bis 6, worin das Plazieren der Abdeckfolie durch Plazieren der Darstellungsschicht in einer solchen Weise, dass sie auf den geformten Artikel ausgerichtet ist, durchgeführt wird.

8. Verfahren gemäss mindestens einem der Ansprüche 1 bis 7, worin die Darstellungsschicht oder die Darstellungsschicht und ein Teil der einen Seite des Substratblattes, auf deren Anteil keine Darstellungsschicht vorhanden ist, mit der Silicongummi-Zusammensetzung in der Form kontaktiert ist/sind, und mindestens ein Teil der Darstellungsschicht enthält eine Bindungsbeschleunigungskomponente.

9. Verfahren gemäss mindestens einem der Ansprüche 2 bis 7, worin die Abdeckfolie ferner eine Ablöseschicht umfasst, die zwischen dem Substratblatt und der Darstellungsschicht befindlich ist,
die Darstellungsschicht oder die Darstellungsschicht und ein Teil der Ablöseschicht, auf deren Anteil keine Darstellungsschicht vorhanden ist, ist/sind mit der Silicongummi-Zusammensetzung in der Form kontaktiert,
mindestens ein Teil der Darstellungsschicht und/oder ein Teil der Ablöseschicht enthalten die Bindungsbeschleunigungskomponente, und
die Ablöseschicht verbleibt zusammen mit der Darstellungsschicht auf dem geformten Silicongummiartikel, wenn das Substratblatt nach dem Aushärten der Silicongummizusammensetzung abgetrennt wird.

10. Verfahren gemäss mindestens einem der Ansprüche 1 bis 9, worin die Abdeckfolie ferner eine Haftschicht auf zumindest einem Teil der Darstellungsschicht oder auf zumindest einem Teil der Darstellungsschicht und zumindest einem Teil des Substratblattes, in dessen Bereich keine Darstellungsschicht vorhanden ist, umfasst,
die Haftschicht oder die Haftschicht und ein Teil der Darstellungsschicht, in dessen Bereich keine Haftschicht vorhanden ist und/oder ein Teil des Substratblattes, in dessen Bereich weder die Haftschicht noch die Darstellungsschicht vorhanden ist, steht/stehen in Kontakt mit dem Silicongummimaterial in der Form, und
zumindest ein Teil der Haftschicht oder zumindest ein Teil der Haftschicht und zumindest ein Teil der Darstellungsschicht, in dessen Bereich keine Haftschicht vorhanden ist, und/oder zumindest ein Teil der Ablöseschicht, in dessen Bereich weder die Haftschicht noch die Darstellungsschicht vorhanden ist, enthalten die Bindungsbeschleunigungskomponente.

11. Verfahren gemäss mindestens einem der Ansprüche 1 bis 10, worin die ungehärtete Silicongummi-Zusammensetzung eine flüssige Silicongummi-Zusammensetzung vom Additionsreaktionstyp ist und folgendes umfasst:
Komponente (a): ein Polyorganosiloxan, das mindestens zwei Alkenylgruppen pro Molekül enthält;
Komponente (b): ein Polyorganohydrogensiloxan, das mindestens zwei Wasserstoffatome pro Molekül enthält, die an das gleiche Siliciumatom oder unterschiedliche Siliciumatome gebunden sind; und
Komponente (c): eine Platinverbindung, und
vorzugsweise ist mindestens eines, ausgewählt aus der Anzahl der Alkenylgruppen pro Molekül der Komponente (a) und der Anzahl der Wasserstoffatome, die an (ein) Siliciumatom(e) pro Molekül der Komponente (b) gebunden sind, im Durchschnitt nicht kleiner als 3.

12. Verfahren gemäss mindestens einem der Ansprüche 1 bis 11, worin der Gehalt der Bindungsbeschleunigungskomponente im Bereich zwischen 0,1-10 Gew.% auf Basis des Bereichs, der die Komponente enthält, beträgt.

13. Abdeckfolie zur Herstellung eines geformten Silicongummiartikels mit darauf aufgebrachter Darstellung, die ein Substratblatt und eine Darstellungsschicht, die auf zumindest einem Teil auf einer Seite des Substratblattes befindlich ist, umfasst und die **dadurch gekennzeichnet ist, dass** zumindest ein Teil der Abdeckfolie mit Ausnahme des Substratblattes, dessen Bereich die Silicongummi-Zusammensetzung in der Form kontaktiert, als Bindungsbeschleunigungskomponente mindestens eine Verbindung enthält, die ausgewählt ist aus Alkoxysilanen, die mindestens eine ungesättigte Bindung enthalten, und Polyorganohydrogensiloxanen, die mindestens zwei Wasserstoffatome enthalten, die an das gleiche Siliciumatom oder unterschiedliche Siliciumatome gebunden sind.

14. Abdeckfolie gemäss Anspruch 13, worin die Alkoxysilane Triethoxyvinylsilan, Tris(2-methoxyethoxy)vinylsilan und 3-Methacryloxypropyltrimethoxysilan einschliessen.

15. Abdeckfolie gemäss Anspruch 13 oder 14, worin die Darstellungsschicht oder die Darstellungsschicht und ein Teil der einen Seite des Substrats, in dessen Bereich keine Darstellungsschicht vorhanden ist, mit der Silicongummi-Zusammensetzung in der Form kontaktiert ist/sind, und zumindest ein Teil der Darstellungsschicht enthält die Bindungsbeschleunigungskomponente.

16. Abdeckfolie gemäss mindestens einem der Ansprüche 13 bis 15, worin die Abdeckfolie ferner eine Ablöseschicht umfasst, die zwischen dem Substratblatt und der Darstellungsschicht befindlich ist,
die Darstellungsschicht oder die Darstellungsschicht und ein Teil der Ablöseschicht, in dessen Bereich keine Darstellungsschicht vorhanden ist, sind mit der Silicongummi-Zusammensetzung in der Form kontaktiert,
mindestens ein Teil der Darstellungsschicht und/oder ein Teil der Ablöseschicht enthalten die Bindungsbeschleunigungskomponente, und
die Ablöseschicht verbleibt zusammen mit der Darstellungsschicht auf dem geformten Silicongummiartikel, wenn das Substratblatt nach dem Aushärten der Silicongummizusammensetzung abgetrennt wird.

17. Abdeckfolie gemäss mindestens einem der Ansprüche 13 bis 16, worin die Abdeckfolie ferner eine Haftschicht auf zumindest einem Teil der Darstellungsschicht oder auf zumindest einem Teil der Darstellungsschicht und zumindest einem Teil des Substratblattes, in dessen Bereich keine Darstellungsschicht vorhanden ist, umfasst,
die Haftschicht oder die Haftschicht und ein Teil der Darstellungsschicht, in dessen Bereich keine Haftschicht vorhanden ist und/oder ein Teil des Substratblattes, in dessen Bereich weder die Haftschicht noch die Darstellungsschicht vorhanden ist, steht/stehen in Kontakt mit dem Silicongummimaterial in der Form, und
zumindest ein Teil der Haftschicht oder zumindest ein Teil der Haftschicht und zumindest ein Teil der Darstellungsschicht, in dessen Bereich keine Haftschicht vorhanden ist, und/oder zumindest ein Teil der Ablöseschicht, in dessen Bereich weder die Adhäsionsschicht noch die Darstellungsschicht vorhanden ist, enthalten die Bindungsbeschleunigungskomponente.

18. Abdeckfolie gemäss mindestens einem der Ansprüche 13 bis 17, worin der Teil, der mit der ungehärteten Silicongummi-Zusammensetzung kontaktiert ist, mindestens ein Urethanharz enthält.

19. Geformter Silicongummiartikel mit darauf aufgebrachter Darstellung, der nach einem Verfahren gemäss mindestens einem der Ansprüche 1 bis 12 hergestellt wird.

20. Geformter Silicongummiartikel mit darauf aufgebrachter Darstellung, der unter Verwendung einer Abdeckfolie gemäss mindestens einem der Ansprüche 13 bis 18 hergestellt wird.

## Revendications

1. Procédé de production d'un article moulé en caoutchouc silicone sur lequel est fixé un dessin comprenant les étapes consistant à:
placer sur un moule un film de couverture qui comprend une feuille de substrat et une couche de dessin qui est située sur au moins une portion d'une face de la feuille de substrat, et
introduire une composition de caoutchouc silicone non durci dans une cavité du moule sur une face de la couche de dessin et durcir la composition de manière à former un article moulé en caoutchouc silicone qui est intégré avec le film de couverture,
**caractérisé en ce qu'**au moins une portion du film de couverture excepté la portion de feuille de substrat qui est en contact avec la composition de caoutchouc silicone dans le moule contient, comme composant accélérateur de collage, au moins un composé choisi dans le groupe constitué des alcoxysilanes contenant au moins une liaison insaturée et des polyorganohydrogénosiloxanes contenant au moins deux atomes d'hydrogène qui sont liés au même atome de silicium ou à des atomes de silicium différents.

2. Procédé selon la revendication 1 comprenant en outre l'étape consistant à:
séparer le matériau de substrat de l'article moulé en caoutchouc silicone qui est intégré avec le film de couverture.

3. Procédé selon la revendication 2 dans lequel l'étape de séparation de la feuille de substrat comprend les étapes consistant à :
ouvrir le moule après durcissement de la composition de caoutchouc silicone et retirer du moule l'article moulé de caoutchouc silicone qui est intégré avec le film de couverture, et
peler la feuille de substrat de l'article moulé de caoutchouc silicone qui est intégré avec le film de couverture de manière à obtenir l'article moulé de caoutchouc silicone avec le dessin attaché.

4. Procédé selon la revendication 2 dans lequel l'étape de séparation de la feuille de substrat comprend les étapes consistant à :
ouvrir le moule après durcissement de la composition de caoutchouc silicone et peler la feuille de substrat de l'article moulé de caoutchouc silicone qui est intégré avec le film de couverture de manière à ce que l'article moulé de caoutchouc silicone avec le dessin attaché soit laissé dans le moule, et
retirer du moule l'article moulé de caoutchouc silicone avec le dessin attaché.

5. Procédé selon la revendication 2 dans lequel l'étape de séparation de la feuille de substrat comprend l'étape consistant à ouvrir le moule après durcissement de la composition de caoutchouc silicone et à enlever l'article moulé de caoutchouc silicone avec le dessin attaché en pelant la feuille de substrat de l'article moulé de caoutchouc silicone qui est intégré avec le film de couverture.

6. Procédé selon l'une quelconque des revendications 1 à 5, dans lequel les alcoxysilanes comprennent le triéthoxyvinylsilane, le tris(2-méthoxyéthoxy)vinylsilane et le 3-méthacryloxypropyltriméthoxysilane.

7. Procédé selon l'une quelconque des revendications 1 à 6, dans lequel on réalise le placement du film de couverture en plaçant la couche de dessin de manière à ce qu'elle soit alignée avec l'article moulé.

8. Procédé selon l'une quelconque des revendications 1 à 7, dans lequel la couche de dessin, ou la couche de dessin et une portion de ladite face de la feuille de substrat, sur laquelle une couche de dessin n'est pas présente, est en contact avec la composition de caoutchouc silicone dans le moule, et
au moins une portion de la couche de dessin contient le composant accélérant le collage.

9. Procédé selon l'une quelconque des revendications 2 à 7, dans lequel le film de couverture comprend en outre une couche anti-adhérente située entre la feuille de substrat et la couche de dessin,
la couche de dessin, ou la couche de dessin et une portion de la couche anti-adhérente, sur laquelle une couche de dessin n'est pas présente, est en contact avec la composition de caoutchouc silicone dans le moule,
au moins une portion de la couche de dessin et/ou une portion de la couche anti-adhérente contient le composant accélérant le collage, et
la couche anti-adhérente reste sur l'article moulé de caoutchouc silicone avec la couche de dessin lorsque la feuille de substrat est séparée après durcissement de la composition de caoutchouc silicone.

10. Procédé selon l'une quelconque des revendications 1 à 9, dans lequel le film de couverture comprend en outre une couche d'adhérence sur au moins une portion de la couche de dessin, ou sur au moins une portion de la couche de dessin et au moins une portion de la feuille de substrat, sur laquelle une couche de dessin n'est pas présente,
la couche d'adhérence ou la couche d'adhérence et une portion de la couche de dessin, sur laquelle une couche d'adhérence n'est pas présente et/ou une portion de la feuille de substrat sur laquelle ni la couche d'adhérence ni la couche de dessin n'est présente, est en contact avec le matériau de caoutchouc silicone dans le moule, et
au moins une portion de la couche d'adhérence, ou au moins une portion de la couche d'adhérence et au moins une portion de la couche de dessin sur laquelle une couche d'adhérence n'est pas présente et/ou au moins une portion de la couche anti-adhérente sur laquelle ni la couche d'adhérence ni la couche de dessin n'est présente contiennent le composant accélérateur de collage.

11. Procédé selon l'une quelconque des revendications 1 à 10, dans lequel la composition de caoutchouc silicone non durcie est une composition de caoutchouc silicone liquide d'un type à réaction d'addition, et comprend
composant a) :un polyorganosiloxane qui contient au moins deux groupes alcényle pour une molécule ;
composant b) ; un polyorganohydrogénosiloxane qui contient au moins deux atomes d'hydrogène pour une molécule qui sont liés au même atome de silicium ou à des atomes de silicium différents ; et
composant c) : un composé du platine, et
de préférence au moins un du nombre de groupe alcényle pour une molécule de composant a) et du nombre d'atomes d'hydrogène qui se lient à un ou à des atomes de silicium pour une molécule de composant b) n'est pas inférieur à 3 en moyenne.

12. Procédé selon l'une quelconque des revendications 1 à 11, dans lequel la concentration du composant accélérant le collage est dans la gamme comprise entre 0,1 et 10 % en poids sur la base de la portion qui contient le composant.

13. Film de couverture utilisé pour la production d'un article moulé de caoutchouc silicone avec un dessin attaché qui comprend une feuille de substrat et une couche de dessin qui est située sur au moins une portion d'une face de la feuille de substrat, et qui est **caractérisé en ce qu'**au moins une portion du film de couverture excepté la feuille de substrat dont une portion est en contact avec la composition de caoutchouc silicone dans le moule contient, comme composant accélérant le collage, au moins un composé choisi dans le groupe constitué des alcoxysilanes contenant au moins une liaison insaturée et des polyorganohydrogénosiloxanes contenant au moins deux atomes d'hydrogène qui se lient au même atome de silicium ou à des atomes de silicium différents.

14. Film de couverture selon la revendication 13, dans lequel les alcoxysilanes comprennent le triéthoxyvinylsilane, le tris(2-méthoxy-éthoxy)vinylsilane et le 3-méthacryloxypropyltriméthoxysilane.

15. Film de couverture selon la revendication 13 ou 14, dans lequel la couche de dessin, ou la couche de dessin et une portion de ladite face de la feuille de substrat, sur laquelle une couche de dessin n'est pas présente, est en contact dans le moule avec la composition de caoutchouc silicone, et
au moins une portion de la couche de dessin contient le composant accélérant le collage.

16. Film de couverture selon l'une quelconque des revendications 13 à 15, dans lequel le film de couverture comprend en outre une couche anti-adhérente située entre la feuille de substrat et la couche de dessin,
la couche de dessin ou la couche de dessin et une portion de la couche anti-adhérente, sur laquelle une couche de dessin n'est pas présente, est en contact dans le moule avec le matériau de caoutchouc silicone,
au moins une portion de la couche de dessin et/ou une portion de la couche anti-adhérente contient le composant accélérant le collage, et
la couche anti-adhérente reste sur l'article moulé de caoutchouc silicone avec la couche de dessin lorsque la couche de substrat est séparée après durcissement de la composition de caoutchouc silicone.

17. Film de couverture selon l'une quelconque des revendications 13 à 16, dans lequel le film de couverture comprend en outre une couche d'adhérence située sur au moins une portion de la couche de dessin, ou sur au moins une portion de la couche de dessin et au moins une portion de la feuille de substrat sur laquelle une couche de dessin n'est pas présente,
la couche d'adhérence ou la couche d'adhérence et une portion de la couche de dessin sur laquelle une couche adhérente n'est pas présente et/ou une portion de la feuille de substrat, sur laquelle ni la couche d'adhérence ni de couche de dessin n'est présente, est en contact avec le matériau de caoutchouc silicone dans le moule, et
au moins une portion de la couche adhérente, ou au moins une portion de la couche adhérente et au moins une portion de la couche de dessin, sur laquelle une couche adhérente n'est pas présente et/ou au moins une portion de la couche anti-adhérente, sur laquelle ni la couche d'adhérence ni la couche de dessin n'est présente, contient le composant accélérant le collage.

18. Film de couverture selon l'une quelconque des revendications 13 à 17, dans lequel une portion qui est en contact avec la composition de caoutchouc silicone non durci contient au moins une résine uréthane.

19. Article moulé de caoutchouc silicone avec un dessin attaché qui est produit conformément à un procédé quelconque selon les revendications 1 à 12.

20. Article moulé de caoutchouc silicone avec un dessin attaché qui est produit en utilisant un film de couverture quelconque selon les revendications 13 à 18.
